# EUROPÄISCHE PATENTANMELDUNG

(11) **EP 1 637 807 A2**
(43) Veröffentlichungstag der Anmeldung: **22.03.2006**
(21) Anmeldenummer: 05020071.6
(22) Anmeldetag: 15.09.2005
(51) Int. Cl.: F24B 1/06, E04F 13/14

(54) **Selbsttragende Kachelverkleidung sowie Verbindungssystem dafür**

(30) Priorität: 15.09.2004 DE 202004014484 U
(71) Anmelder: Mertens- Kachelöfen und Fliesen GmbH, 21423 Winsen/Luhe (DE)
(72) Erfinder: Mertens, Walter, 21423 Winsen/Luhe (DE)
(74) Vertreter: Hansen, Jochen

(57) **Zusammenfassung**

Die Erfindung betrifft eine selbsttragende Kachelverkleidung für Kachelöfen, insbesondere Grundöfen, bestehend aus einer Vielzahl von miteinander verbundenen Kachelelementen (1, 1'), wobei für die Verbindung der Kachelelemente (1, 1') Verbindungslaschen (2), insbesondere aus Metall, bevorzugt Stahl, verzinktem Stahl oder Edelstahl, vorgesehen sind, die, an der Rückseite der Kachelelemente (1, 1') angeordnet und jeweils an wenigstens einem Kachelelement (1, 1') befestigt sind.

Ferner betrifft die Erfindung ein Kachelverbindungssystem zum Aufbau einer erfindungsgemäßen selbsttragenden Kachelverkleidung bestehend aus Verbindungslaschen aus flächigem Material und zugeordneten Verbindungsmitteln.

## Beschreibung

Die Erfindung betrifft eine selbsttragende Kachelverkleidung für Kachelöfen, insbesondere Grundöfen, bestehend aus einer Vielzahl von miteinander verbundenen Kachelelementen. Ferner betrifft die Erfindung ein Kachelverbindungssystem zum Aufbau einer selbsttragenden Kachelverkleidung.

Traditionell wird die Kachelverkleidung von Kachelöfen, insbesondere auch von Grundöfen, als selbsttragende, nicht mit dem inneren Ofenaufbau verbundene Außenschale erstellt. Dabei besteht die selbsttragende Kachelverkleidung aus einzelnen Kachelelementen, meist flächige, rechteckige oder quadratische Kacheln, teils auch Formsteine, die mit dafür geeignetem Mörtel untereinander verbunden und aufgemauert werden. Dabei weisen übliche Ofenkacheln eine Materialstärke von 50 bis 60 mm auf, so dass sich eine schalenartige Verkleidung ergibt.

Nachteilig bei dieser traditionellen Aufbauweise einer Kachelverkleidung ist, dass beim Aufmauern eine ausreichende Stabilität der Kachelverkleidung erst nach Anziehen des Mörtels und mit einer ausreichenden Materialstärke gegeben ist. Folglich besteht die Gefahr, dass beim Aufmauern der Kachelverkleidung das erst frische, sich bildende Gefüge gestört wird. Ferner ist nachteilig, dass während der langen Nutzungsdauer eines Kachelofens durch die ständigen thermischen Lastwechselreaktionen beim Aufheizen und Wiederabkühlen das durch die Vermörtelung gegebene Gefüge der Kachelverkleidung sich mit der Zeit lösen kann.

Daher bieten einige Ofenkachelhersteller Kacheln mit einer Hakenanordnung an, die an einer am inneren Ofenaufbau installierten Halterung aufgehängt werden können. Die einzelnen Ofenkacheln sind somit zwar lagegesichert, durch die zusätzliche Tragkonstruktion für die anzuhängenden Ofenkacheln wird jedoch die erwünschte Entkopplung zwischen Innenofen und Kachelverkleidung gestört. Zudem ist diese Art der Befestigung bei der Montage und Vorbereitung zeit- und damit kostenaufwendig.

Aufgabe der Erfindung ist es daher eine selbsttragende Kachelverkleidung anzugeben, die eine hohe Standsicherheit auch nach langer Nutzungsdauer des Kachelofens aufweist. Ferner ist es Aufgabe der Erfindung eine beim Aufbau unmittelbar stabile Konstruktion anzugeben, die schnell und kostengünstig aufgebaut werden kann.

Gelöst wird diese Aufgabe mit einer selbsttragenden Kachelverkleidung gemäß Anspruch 1. Zur Verbindung der die Kachelverkleidung bildenden einzelnen Kachelelemente wird die Aufgabe mit dem Kachelverbindungssystem gemäß Anspruch 10 gelöst.

Dadurch, dass für die Verbindung der Kachelelemente Verbindungslaschen an der Rückseite der Kachelelemente vorgesehen sind, die jeweils an wenigstens einem Kachelelement befestigt sind, wird eine unmittelbar, mechanisch definierte Verbindung zwischen den zusammenzufügenden Kachelelementen gebildet. Die Befestigung der Verbindungslaschen an den Kachelelementen kann dabei auch mit Klebstoff erfolgen, wobei jedoch die erforderliche Reaktionszeit des Klebers den Arbeitsfortschritt beim Aufbau der Kachelverkleidung begrenzen könnte. Bevorzugt ist daher die Ausgestaltung mit einer Schraubbefestigung in den zugeordneten Sackbohrungen. Entsprechend können auch Kachelverkleidungen aus Kachelelementen mit einer geringeren Materialstärke von beispielsweise 30 bis 40 mm aufgebaut werden, womit die Verarbeitung vereinfacht und kostengünstiger wird.

Wenn zur Befestigung der Verbindungslaschen Schrauben vorgesehen sind, wobei die Verbindungslaschen Durchgangsöffnungen und die Kachelelemente auf ihrer Rückseite dazu korrespondierende Sackbohrungen aufweisen, in die die Schrauben durch die Durchgangsöffnungen der Verbindungslaschen durchgreifend einschraubbar sind, wird eine mechanisch sichere Verbindung zwischen zwei aneinandergrenzenden Kachelelementen unmittelbar mit Festziehen der Schrauben erzeugt.

Dadurch, dass in den Sackbohrungen Dübel, bevorzugt Messing-Gewindedübel, angeordnet sind, in die die Schrauben einschraubbar sind, wird eine sichere Befestigung der Verbindungslasche am jeweiligen Kachelelement erreicht. Überraschenderweise hat sich bei der Verwendung von Messing-Gewindedübeln bei einer ordnungsgemäßen Abstimmung von Bohrungstiefe, Bohrungsdurchmesser und Schraubendimensionierung gezeigt, dass eine Zerstörung des Kachelelementes durch zu starkes Anziehen der Gewindeschraube in dem Gewindedübel nicht möglich ist. Sobald die Schraube festgezogen ist, wird bei weiterem Festdrehen der Messing-Gewindedübel in der Sackbohrung im Kachelelement mitgedreht, ohne dass Beschädigungen oder ein Lösen der Schraube auftreten. Entsprechend sind für die Verbindung Gewindeschrauben vorgesehen, bevorzugt verzinkt oder aus Edelstahl mit Schlüsselkopf in der Dimension 6 x 20 mm mit einer Unterlegscheibe, vorzugsweise 6,4 x 25 mm. Die Unterlegscheibe ermöglicht dabei eine Lastverteilung, insbesondere bei der Verwendung von Langlöchern in den Verbindungslaschen.

Wenn die Verbindungslaschen aus Metall, bevorzugt Stahl, verzinktem Stahl oder Edelstahl hergestellt sind, entsteht eine mechanisch hoch belastbare Verbindung, die gleichzeitig ausreichend elastisch, beispielsweise auf Knickbelastungen während des Aufbauens der Kachelverkleidung reagieren kann. Bei der Verwendung von verzinktem Stahl oder Edelstahl ist ein erwünschter Rostschutz gewährleistet.

Als Verbindungslaschen sind flache Verbindungslaschen mit Kröpfung und Winkelelemente vorgesehen. Derartige Verbindungslaschen können kostengünstig aus flächigem Rohmaterial, beispielsweise verzinktem Stahlblech in der Serienfertigung beispielsweise durch entsprechende Stanz- und Biegewerkzeuge hergestellt werden.

Um die für den Aufbau einer Kachelverkleidung üblicher Dimensionierung und Form erforderlichen Verbindungslaschen zu begrenzen, hat sich herausgestellt, dass vier Varianten, nämlich A: flache Verbindungslasche, bevorzugt 100 × 50 × 3 mm; B: flache gekröpfte Verbindungslasche, bevorzugt 100 × 50 × 3 + 3 mm; C: ungleichschenkliges Winkelelement 90°, bevorzugt 90/53 × 50 × 3 mm; und D: gleichschenkliges Winkelelement 90°, bevorzugt 90/90 × 50 × 3 mm, ausreichend sind. Für horizontale Verbindungen in gleicher Ebene werden die flachen Verbindungslaschen A verwendet. Bei Ecklösungen können die Winkelelemente C bzw. D verwendet werden. Für die vertikale Verbindung aneinandergrenzender Kachelelemente kann sowohl die flache Verbindungslasche A wie auch die gekröpfte Verbindungslasche B verwendet werden. Die gekröpfte Verbindungslasche B erlaubt dabei in Verbindung mit einer zwischen Kachelelement und gekröpfter Verbindungslasche eingesteckter flacher Verbindungslasche, die an dem darüberliegenden Kachelelement befestigt ist, eine Rastlagerung. Diese Rastlagerung erlaubt eine Verschiebung in der Aufbauebene der zu verbindenden Kachelelemente, bildet jedoch in normaler Richtung zu dieser Fläche eine Fixierung. Mit einer derartigen Verbindung können thermische Ausgleichsbewegungen wie auch Lagenachjustierungen beim Aufbau zugelassen werden.

Zum Ausgleich von Materialstärkeschwankungen in den Kachelelementen ist ferner ein Unterlegelement für die Verbindungslaschen vorgesehen, nämlich E: flache Lasche, bevorzugt 50 × 50 × 1 mm.

Dadurch, dass zwischen zwei mit ihren Stirnkanten aneinandergrenzenden Kachelelementen ein Abstandshalter zur Bildung einer Fuge angeordnet ist, wird ein gleichmäßiges Fugbild der Kachelverkleidung gewährleistet. Der Abstandshalter ist aus einem hitzebeständigen, bevorzugt elastischdichtendem Material. Vorzugsweise ist der Abstandshalter ein selbstklebendes Keramikfaserband, bevorzugt in der Dimension 5 mm (Fugenbreite) × 20 mm.

Wenn die durch den Abstandshalter aufgespannte Fuge zwischen aneinandergrenzenden Kachelelementen auf der Sichtseite der Kachelverkleidung mit Kachelofenfugmörtel ausgefüllt ist, ist die Sichtseite der Kachelverkleidung von herkömmlich hergestellten Kachelverkleidungen nicht unterscheidbar.

Nachfolgend wird ein Ausführungsbeispiel eines erfindungsgemäßen Verbindungssystems zur Bildung einer selbsttragenden Kachelverkleidung anhand der beiliegenden Zeichnungen detailliert beschrieben.

Darin zeigt:
- Fig. 1: eine selbsttragende Kachelverkleidung in Rückansicht in einem Ausschnitt,
- Fig. 2: im Querschnitt eine Verbindung zweier aneinandergrenzender Kachelelemente,
- Fig. 3: Verbindungslaschen in fünf Varianten eines Verbindungssystems in Draufsicht und
- Fig. 4: die fünf Verbindungslaschen der Fig. 3 in Seitenansicht.

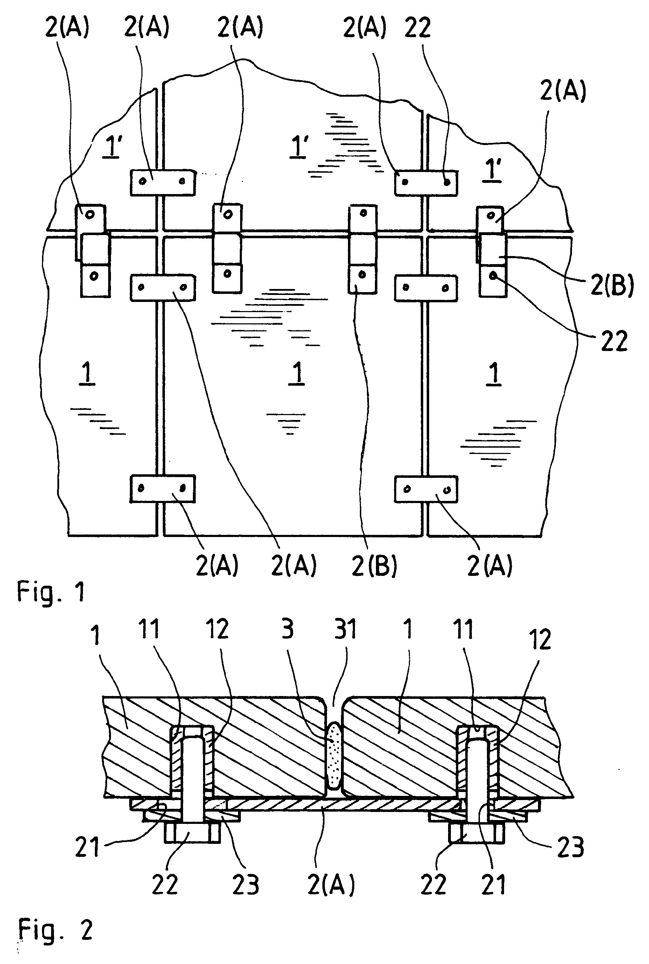

In Fig. 1 ist ein beispielhafter Aufbau einer Kachelverkleidung in einem Ausschnitt von der Rückseite her gesehen dargestellt. Es handelt sich dabei um rechteckige, flächige Kachelelemente 1, 1'.

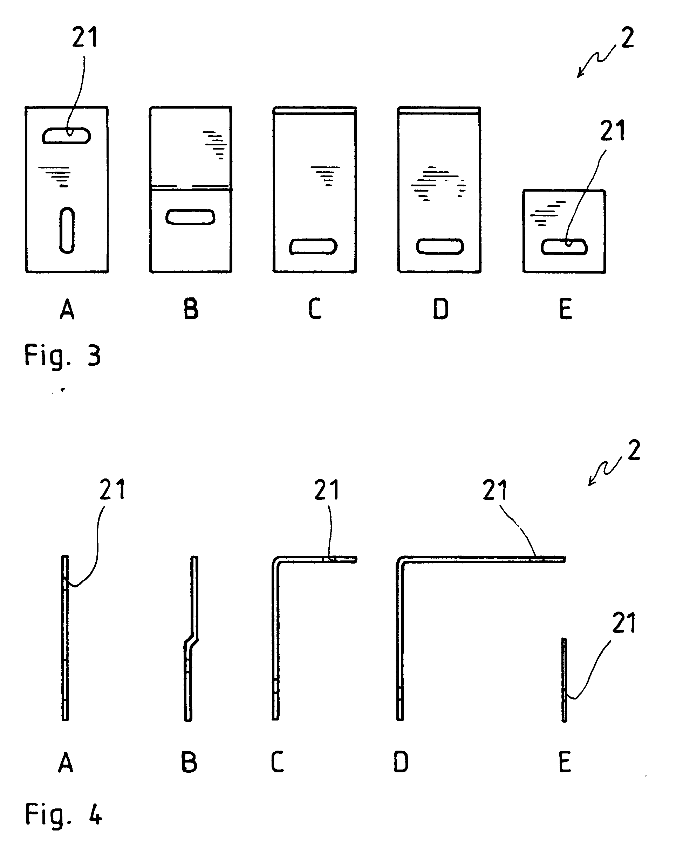

In einer ersten Schicht sind die Kachelelemente 1, 1, 1 auf dem Boden aufgestellt und mit Verbindungslaschen 2 miteinander verbunden. Dabei sind im dargestellten Ausführungsbeispiel die Kachelelemente 1, 1, 1 horizontal mit Verbindungslaschen 2 der Variante A in Form einer flachen Verbindungslasche, wie in Fig. 3, 4 A dargestellt, verbunden. Die Verbindungslaschen 2 weisen Durchgangsöffnungen 21, bevorzugt in Form von Langlöchern 21 auf. Durch die Durchgangsöffnungen 21 sind Schrauben 22 durchgesteckt und in zugeordnete Sackbohrungen 11 des Kachelelementes 1 in einen darin eingeführten Dübel 12 eingeschraubt, wie in Fig. 2 im Querschnitt ersichtlich ist.

Ferner ist zur besseren Lastverteilung zwischen dem Kopf der Schraube 22 und der Verbindungslasche 2 eine Unterlegscheibe 23 vorgesehen. Die Unterlegscheibe 23 hat bei einer bevorzugten Verwendung von verzinkten Gewindeschrauben mit Schlüsselkopf in der Dimension 6 × 20 mm eine Größe von 6,4 × 25 mm (sog. Kotflügelscheiben).

Bei einer Materialstärke des Kachelelementes 1 von bevorzugt 30 bis 40 mm hat die Sackbohrung eine Tiefe von 15 bis 20 mm. Der Durchmesser der Bohrung 11 beträgt je nach verwendetem Dübel 12 und Schraube 22 6 bis 10 mm.

Beim weiteren Aufbau wird die zweite Schicht der Kachelelemente 1', 1', 1' ebenfalls horizontal miteinander über Verbindungslaschen 2 der Variante A verbunden. Anschließend wird die verschraubte zweite Schicht der Kachelelemente 1', 1', 1' auf die erste Kachelelementschicht 1, 1, 1 aufgesetzt. Dabei ist an den unteren Kachelelementen 1, 1, 1 jeweils mindestens ein Verbindungselement in flacher, gekröpfter Variante B vorgesehen, in die eine Verbindungslasche 2 der Variante A von der zweiten Kachelelementschicht 1', 1', 1' hineinragend angeordnet sind. Mit dieser Verbindung (Rastverbindung) wird eine Ausrichtung und Fixierung der übereinander angeordneten Kachelementschichten 1, 1, 1 mit 1', 1', 1' normal zur Fläche der Kachelelement erreicht. In Flächenrichtung hingegen erlaubt diese Rastlagerung den Abbau von thermischen Spannungen. Ferner wird durch diese Konstruktion der Aufbau erleichtert, da eine nachträgliche Ausrichtung der übereinander gesetzten Schichten von Kachelelementen 1, 1, 1 und 1', 1', 1' durch seitliches Verschieben um einige Milimeter jederzeit möglich ist.

Die Fig. 1 zeigt dabei lediglich einen beispielhaften Aufbau. Selbstverständlich können auch Kachelelemente als Formteile, also als Viertelrundelemente, Formecken, Abschrägungen etc. verwendet werden. Ferner ist es möglich durch Verbindungslaschen 2 in Winkelform, wie beispielsweise die Varianten C und D gemäß Fig. 3 und 4 auch einen Winkelaufbau mit flächigen Kachelelementen zu erstellen.

Ferner ist in den Fig. 3 und 4 noch ein Unterlegelement als Variante E dargestellt. Mit der Variante E der Verbindungslaschen 2 können Schwankungen in der Materialstärke der aneinandergesetzten Kachelelemente 1, 1' ausgeglichen werden. Bevorzugt weist daher die Verbindungslasche E eine Dimension von 50 × 50 × 1 mm auf. Die Verbindungslaschen A, B, C und D sind aus 3 mm starken, verzinkten Stahlblech, bevorzugt in den Dimensionen 100 × 50 × 3 mm (Variante A), 100 × 50 × 3 + 3 mm (Variante B), 90/53 × 50 × 3 mm (Variante C) und 90/90 × 50 × 30 (Variante D) mit entsprechend zugeordneten Langlöchern 21, wie aus den Fig. 3 und 4 entnehmbar.

Um ein gewünschtes Fugbild der miteinander verbundenen Kachelelemente 1, 1' zu erreichen, wird zwischen zwei aneinandergrenzenden Kachelelementen 1, 1, wie in Fig. 2 dargestellt, ein selbstklebendes Keramikfaserband, bevorzugt in der Dimension 5 mm Stärke x 20 mm Breite eingefügt. Das Keramikband 3 wird dabei auf die Stirnfläche eines Kachelelementes 1, 1' so aufgeklebt, dass es zur Sichtseite des Kachelelementes 1, 1' deutlich zurückspringt. Nach dem Aufbau der Kachelverkleidung durch Zusammensetzen mit dem Kachelverbindungssystem bestehend aus den Verbindungslaschen 2 mit zugeordneten Verbindungsmitteln (Schrauben 22, Dübel 12) wird dann von der Sichtseite der Kachelverkleidung ein für Kachelöfen geeigneter Fugenmörtel 31 in handwerklich bekannter Weise eingebracht. Die Kachelverkleidung zeigt daher von der Sichtseite ihr traditionelles Aussehen.

### Bezugszeichenliste

- 1, 1': Kachelelement
- 11: Sackbohrung
- 12: Dübel

- 2: Verbindungslasche
- 21: Durchgangsöffnung, Langloch
- 22: Schraube
- 23: Unterlegscheibe

- 3: Abstandshalter, Keramikband
- 31: Fugenmörtel

## Patentansprüche

1. Selbsttragende Kachelverkleidung für Kachelöfen, insbesondere Grundöfen, bestehend aus einer Vielzahl von miteinander verbundenen Kachelelementen (1, 1'), **dadurch gekennzeichnet, dass** für die Verbindung der Kachelelemente (1, 1') Verbindungslaschen (2), insbesondere aus Metall, bevorzugt Stahl, verzinktem Stahl oder Edelstahl, vorgesehen sind, die an der Rückseite der Kachelelemente (1, 1') angeordnet und jeweils an wenigstens einem Kachelelement (1, 1') befestigt sind.

2. Selbsttragende Kachelverkleidung nach Anspruch 1, **dadurch gekennzeichnet, dass** zur Befestigung der Verbindungslaschen (2) Schrauben (22) vorgesehen sind, wobei die Verbindungslaschen (2) Durchgangsöffnungen (21) und die Kachelelemente (1, 1') auf ihrer Rückseite dazu korrespondierende Sackbohrungen (11) aufweisen, in die die Schrauben (22) durch die Durchgangsöffnungen (21) der Verbindungslaschen (2) durchgreifend einschraubbar sind.

3. Selbsttragende Kachelverkleidung nach Anspruch 2, **dadurch gekennzeichnet, dass** in den Sackbohrungen (11) Dübel (12), bevorzugt Messing-Gewindedübel, angeordnet sind, in die die Schrauben (22) einschraubbar sind.

4. Selbsttragende Kachelverkleidung nach Anspruch 3, **dadurch gekennzeichnet, dass** für die Verbindung Gewindeschrauben (22) vorgesehen sind, bevorzugt verzinkt oder aus Edelstahl mit Schlüsselkopf in der Dimension 6 × 20 mm mit einer Unterlegscheibe (23), vorzugsweise 6,4 × 25 mm.

5. Selbsttragende Kachelverkleidung nach Anspruch 1, 2, 3 oder 4, **dadurch gekennzeichnet, dass** als Verbindungslaschen (2) flache Verbindungslaschen (A), flache Verbindungslaschen mit Kröpfung (B) und Winkelelemente (C, D) vorgesehen sind, insbesondere in der Form
A: flache Verbindungslasche, bevorzugt 100 x 50 x 3 mm;
B: flache gekröpfte Verbindungslasche, bevorzugt 100 × 50 × 3 + 3 mm;
C: ungleichschenkliges Winkelelement 90°, bevorzugt 90/53 × 50 × 3 mm; und
D: gleichschenkliges Winkelelement 90°, bevorzugt 90/90 × 50 × 3 mm.

6. Selbsttragende Kachelverkleidung nach Anspruch 5, **dadurch gekennzeichnet, dass** ein Unterlegelement (E) für die Verbindungslaschen (2) vorgesehen ist, nämlich
E: flache Lasche, bevorzugt 50 × 50 × 1 mm.

7. Selbsttragende Kachelverkleidung nach einem der vorangehenden Ansprüche, **dadurch gekennzeichnet, dass** zwischen zwei mit ihren Stirnkanten aneinandergrenzenden Kachelelementen (1, 1') ein Abstandshalter (3), insbesondere ein selbstklebendes Keramikfaserband, bevorzugt in der Dimension 5 mm (Fugenbreite) × 20 mm, zur Bildung einer Fuge angeordnet ist.

8. Selbsttragende Kachelverkleidung nach Anspruch 7, **dadurch gekennzeichnet, dass** die durch den Abstandshalter (3) aufgespannte Fuge zwischen aneinandergrenzenden Kachelelementen (1, 1') auf der Sichtseite der Kachelverkleidung mit Kachelofenfugmörtel ausgefüllt ist.

9. Selbsttragende Kachelverkleidung nach einem der vorangehenden Ansprüche, **dadurch gekennzeichnet, dass** die Kachelelemente (1, 1') eine Materialstärke von 30 bis 40 mm aufweisen.

10. Kachelverbindungssystem zum Aufbau einer selbsttragenden Kachelverkleidung nach einem der vorangehenden Ansprüche, **gekennzeichnet durch** Verbindungslaschen aus flächigem Material und zugeordneten Verbindungsmitteln.
